**Europäisches Patentamt**

**European Patent Office**

**Office européen des brevets**

(19)

(11) Publication number : **0 391 454 B1**

(12)

# EUROPEAN PATENT SPECIFICATION

(45) Date of publication of patent specification :
25.11.92 Bulletin 92/48

(51) Int. Cl.⁵ : **A22C 9/00**

(21) Application number : **90200347.4**

(22) Date of filing : **15.02.90**

(54) **Device for massaging and/or tenderising meat products.**

(30) Priority : **05.04.89 NL 8900846**

(43) Date of publication of application :
**10.10.90 Bulletin 90/41**

(45) Publication of the grant of the patent :
**25.11.92 Bulletin 92/48**

(84) Designated Contracting States :
**AT BE CH DE DK ES FR GB GR IT LI NL**

(56) References cited :
**NL-A- 7 405 711**
**US-A- 3 441 980**

(73) Proprietor : **LANGEN RESEARCH B.V.**
**Beversestraat 4**
**NL-5431 SH Cuyk (NL)**

(72) Inventor : **Langen, Christianus Petrus**
**Zandkampen 11**
**NL-5431 BB Cuijk (NL)**
Inventor : **Langen, Johannes Christina**
**Jan van Cuijkstraat 26**
**NL-5431 GC Cuijk (NL)**

(74) Representative : **Hoorweg, Petrus Nicolaas et al**
**OCTROOIBUREAU ARNOLD & SIEDSMA**
**Sweelinckplein 1**
**NL-2517 GK The Hague (NL)**

# Description

The invention relates to a device for massaging and tenderizing pieces of meat, which device substantially consists of a vessel for receiving a quantity of meat or pieces of meat, a carrier member belonging to the vessel, which carrier member is provided with elongate means for forming liquid channels in the meat, and means for bringing these elongate means periodically into contact with the meat.

Devices of the type described in the preamble, known from NL-A-7405711, can be equipped with needle-like elements that may or may not be given a hollow form, which penetrate the meat in order to tenderize the structure of the meat, wherein brine or other massaging liquid can be carried or injected into the meat simultaneously or thereafter.

The invention has for its object to improve the device by embodying the injecting means such that the massaging of the meat portions takes place more rapidly, cheaply and efficiently, that is, the quality of the obtained end product is considerably raised.

The device according to the invention is distinguished in that the elongate means consist of one or more rotatably mounted prong-like bodies directed towards the vessel, each one of which is provided with at least one screw-shaped protrusion. Hereinafter the word extrusion is to be read as protrusion.

Because the meat mass is periodically brought into contact with the prong-like body and these prong-like bodies penetrate into the meat, as a result of the screw-shaped extrusion the prong-like body will also be able to undergo turning. This turning increases the massaging action on the meat and provides for the formation of liquid channels, whereby the introduction of liquid, for instance brine, into the meat for processing is improved.

In one embodiment the or each screw-shaped extrusion is a continuous screw-thread, wherein in the transition between screw-thread and prong-like body a space is left free. Because of this space a massaging liquid can be carried into the meat more easily.

The action of the liquid feed can be improved by arranging the spaces of successive screw-thread portions in line with each other to form a continuous channel.

It is recommended to give the prong-like body a conical form, which facilitates penetration into the meat.

Moreover the free edge of the screw-thread can be sharpened, whereby a limited cutting action is applied to the meat.

It is also recommended to mount the prong-like body in a dish-like bearing part into which the continuous channel discharges. Herewith the meat mass, which periodically closes off the dish-like bearing portion, presses liquid out of the space in the dish-like part via the continuous channel into the meat mass.

In a further development of the device at least one portion of the prong-like body is motor-driven, whereby it becomes possible, using the continuous screw-thread on the prong-like body, to pull or push away the meat by reversing the drive.

In yet a further development of the device the screw-threads on the prong-like bodies can be left as well as right-handed, wherein the driving of the left-hand threaded bodies is opposite to that of the right-hand threaded bodies.

Above mentioned and other features will be further elucidated in the figure description hereunder of two embodiments following hereinafter. In the annexed drawing:

Figure 1 shows an upright view of a first embodiment of the device according to the invention, with partially broken away parts,

Figure 2 shows a section or view of the driving used with the device in figure 1 along the line II-II,

Figure 3 shows on enlarged scale a lengthwise view of a prong-shaped element according to the invention,

Figure 4 shows a view corresponding with figure 3 of an alternative embodiment of the prong-like body according to the invention.

Figure 5 shows an upright side view of a second embodiment of the device according to the invention.

The vessel in which the meat is stored in a determined quantity is designated in the figures with the numeral 1. This vessel can be take any random form and can also serve for the meat mass during other treatment processes.

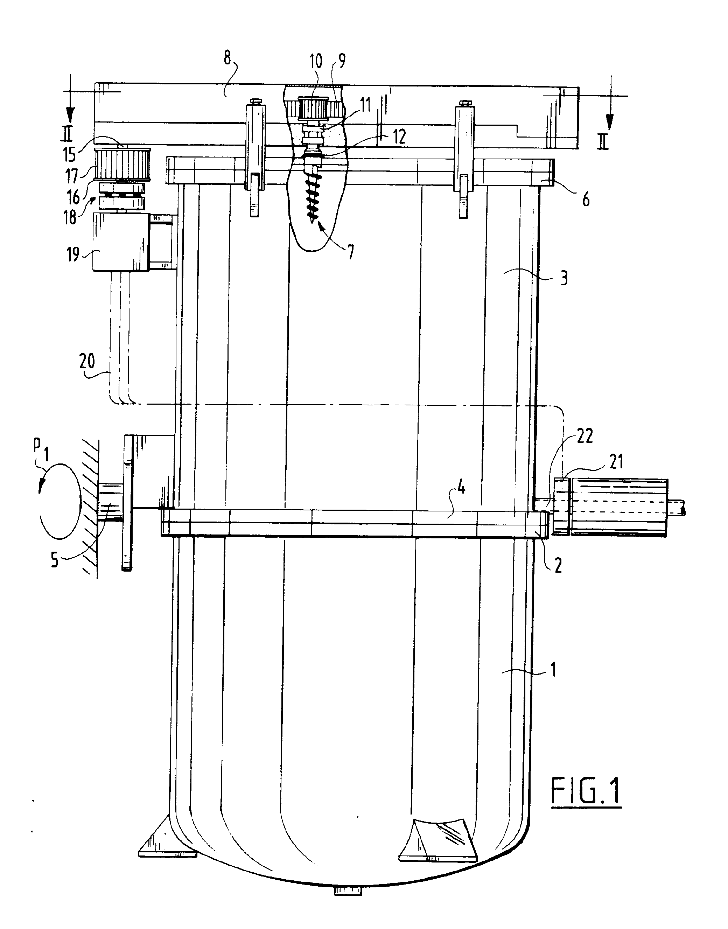

The vessel 1 displays an edge 2 which in the embodiment according to fig. 1 serves as a fastening flange for a closure means 3 provided with a flange 4 corresponding to flange 2. The fastening of the flanges 2 and 4 can take place in any random manner and further falls outside the scope of the invention. The closure means 3 is likewise vessel-shaped in the embodiment shown and has virtually the same capacity as that of the vessel 1.

The system of vessel 1 and closure means 3 is rotatable around a shaft stump 5, which is rotatable by a motor (not shown) in the direction of the arrow P1. In this way the position of the vessel 1 and the closure means 3 can be interchanged, whereby the content of vessel 1 falls into that of the closure means 3.

The plate 6 which closes the side of the closure means 3 remote from the vessel 1 is provided with a number of openings, through which are passed prong-like bodies 7 pointing to the vessel 1, one of which has been made visible in the broken away wall portion in figure 1. The elucidation of the prong-like body follows below.

In the embodiment shown each prong-like body 7 is carried by a plate of a box-shaped housing 8 for a drive system, which box-shaped housing 8 is mounted on the top side of plate 6 in figure 1.

The drive system here consists of a number of toothed belts 9, which are guided along a wheel 10 fixed in line with the prong-like body 7. Each prong-like body is bearing mounted for this purpose by means of two bearings 11 in the bottom plate of the drive casing 8. The prong-like body is moreover held sealingly against the plate 6 by means of a sealing ring 12, whereby a liquid-tight construction is realized between prong-like body 7 and plate 6.

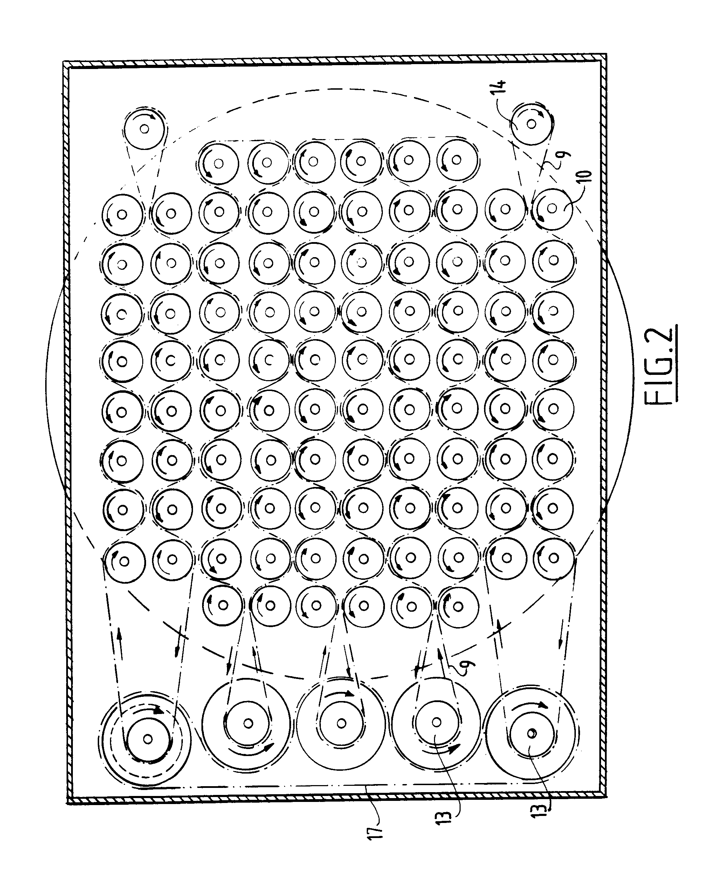

The toothed belt 9 is trained to the left and right around a wheel 10 of adjacent prong-like bodies 7, this as shown in figure 2. The toothed belt 9 is placed at one end around a drive wheel 13 and at the other end around a reversing wheel 14.

As can be seen in figure 2, five toothed drive belts 9 are arranged, which are trained in each case around a group of wheels 10, wherein each toothed belt has its own associated drive wheel 13.

Each wheel 13 is fixed on a vertical shaft 15, which extends to beneath the gear wheel box 8 and is provided with a fixed toothed belt wheel 16 fixedly attached thereto. This wheel 16 co-acts with a common toothed belt 17, which co-acts with the wheel 16 on the underside of the box 8 belonging to each wheel 13. One of the shafts 15 is moreover extended and connected via a coupling 18 to the drive shaft of a drive motor 19. This drive motor 19 is reversible and ensures that the driving of the wheels 10 and therefore the prong-like bodies 7 can be repeatedly reversed.

The control of the motor 19 is carried out via a control connection 20 by a control mechanism 21 which is connected to a rotation shaft 22 located opposite the rotation shaft 5, this such that the position of the vessel 1 or the closure means 3 determines the drive direction of the prong-like bodies 7.

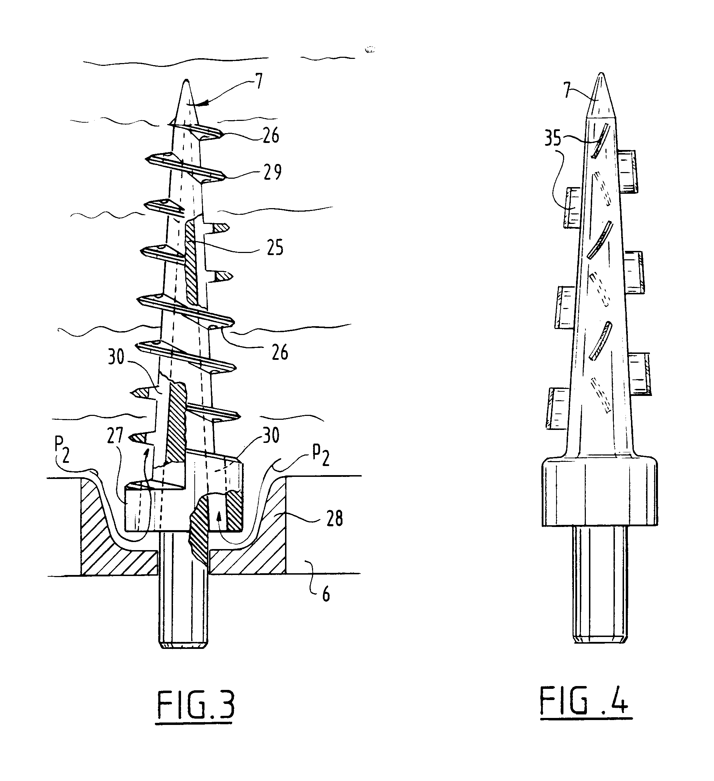

There now follows a description of an embodiment of the prong-like body 7 with reference to figure 3. The prong-like body 7 is a tapered body 25, that is provided on the outer wall with a continuous screw-thread 26. This screw-thread ends on the side lying near the plate 6 in a shoulder 27, which is arranged in a dish-shaped bearing part 28 which is sunk into the plate 6, but which can however also be arranged in another manner.

A continuous bore 30 is arranged parallel to the describing line of the tapering core body 25, this such that spaces are created in the transition between the screw-threaded portion 26 and the core portion 25. Because these lie in line with each other, a continuous upward channel is formed partially in the wall of the core body 25 and partially by the screw-thread. In the embodiment according to figure 3 two channels 30 lying diametrically opposite one another are formed.

It is noted that the thread is sharpened on the free edge portion at 29.

The operation of the device from figure 1 provided with a prong-like body according to figure 3 is further elucidated hereinafter.

When a quantity of meat is arranged in the vessel 1 and that vessel is coupled to the flange 4 of the closure portion 3, an enclosed space is created with a number of prong-like bodies protruding therein.

By rotating the system of vessel 1 and closure body 3 around the shaft 5, the contents, the meat mass, will periodically move from the vessel 1 to the closure body 3 and then out again.

The position of the system is measured via the control means 21, which controls the drive motor 19 such that as the closure portion 3 moves downward and as the meat mass approaches the point of the prong-like bodies 7, these are driven in the correct rotating direction, so that the screw-thread screws itself into the meat mass. The sharpened edge 29 cuts partially into the meat and thereby provides a tenderizing of the meat structure.

As the system of vessel 1 and closure portion 3 rotates further, the meat mass will want to release itself from the prongs 7, which is facilitated by reversing the drive direction of the motor 19, whereby the prong-like bodies screw themselves out of the meat.

Because the meat mass pushes the massaging liquid in the direction of the plate 6, an amount of liquid will be pressed via the dish-shaped upper side of the bearing portion 28 into the channels 30, whereby this liquid is capable of penetrating into the meat mass. This is indicated by the arrow P2 in figure 3.

It is noted that the screw-thread 26 on the prong-like body 7 can be left as well as right-handed, this depending on the drive direction determined according to the belt 9 in a group of driven wheels 10.

After the meat is released from the prong-like bodies 7 and the system of vessel 1 and closure means 3 has turned further, the meat will fall back into the vessel 1 and assume a different mixing position. When once more further rotated, a different portion of the meat mass can therefore be processed. This cycle can be repeated several times, depending on the desired massage and degree of tenderizing of the meat.

When the meat mass is sufficiently massaged, the system of vessel 1 and closure means 3 can be returned to the position as in figure 1 whereby the meat mass is situated in the vessel 1, the vessel 1 is released and further transported for further treatment.

Figure 4 shows an alternative embodiment of the prong-like body 7, that in this embodiment is considered not to be driven by a toothed belt system, but will on the contrary be mounted for free rotation in the plate 6. The screw-threaded portions 35 on the prong-like body are short, a number of which extend over the length of the prong-like part 7. The pitch angle of the thread parts 35 is such that when penetrating the meat, the prong 7 will undergo a turning movement.

When the meat falls back the prong will undergo an opposite movement.

This embodiment can likewise be accommodated in a dish-shaped bearing part 28 if channels 30 here also extend through the prong-like body 7 or are cut out in the peripheral edge thereof.

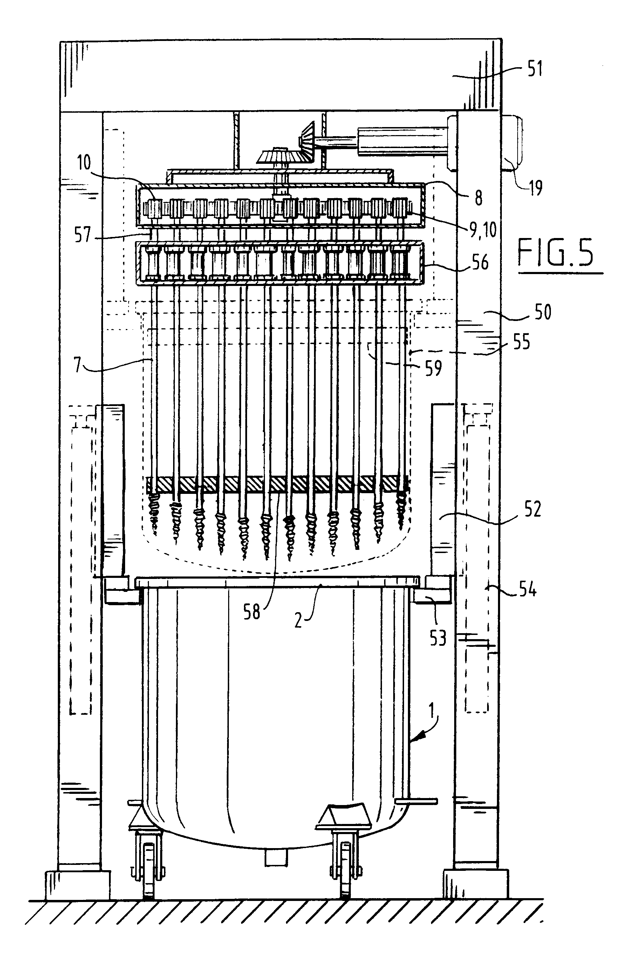

Figure 5 shows a second embodiment of the device, wherein the same reference numerals are used for the same components.

The device consists of a portal constructed from posts 50 and a top beam 51. The portal is provided with lifting means 52, of which a hook-shaped bottom end 53 co-acts with the flange 2 of the vessel 1. The lifting means 52 is up and downward movable along a guide path (not shown) in the portal 50 by means of a hydraulic or pneumatic cylinder 54. In this way the vessel can be carried from a position at the bottom of figure 5 to a position indicated by the dashed line 55 at the top of figure 5 and vice versa.

A box-shaped housing 8 is arranged fixedly on the beam 51 at the top of the portal, in which housing is arranged a transmission 9, 10, this as described with reference to figure 2. Mounted on the underside of the transmission housing 8 is a carrier member 56 in which rotatable elongate elements 7 are rotatably mounted. At the top the elongate elements are lengthened with a spindle 57, which are fixed at the top to the pinions 10 of the transmission.

The elongate elements 7 have a much greater length relative to those according to the fig. 3 and 4, roughly equal to the depth of the vessel 1.

Since the elongate elements 7 therefore display a quite considerable slenderness, it is recommended that a guide plate 58 be arranged, which is provided with through-holes to receive the circular cylindrically embodied shanks of the elongate elements 7. When the elements 7 are turned, the plate 58 is still slidable therealong into the position indicated by the dashed line 59. The sliding is further elucidated below.

According to the invention the ends of the elongate elements 7 are provided with helical extrusions as according to the invention, the embodiments of which are shown in fig. 3 or 4.

The above described embodiment operates as follows:

A vessel 1 filled with a meat mass is rolled into the portal 50, wherein the hook-shaped ends 53 of the lifting device 52 are situated at a level such that the edge 2 comes to lie thereabove. Through energizing of the cylinders 54 the vessel 1 will be moved upward and the elongate elements 7 will be enclosed by the vessel, in other words they penetrate into the meat mass in the vessel 1. The meat mass is held back by the closure plate 58, which is moved upward along the elongate elements 7 with the meat mass in the vessel 1.

Meanwhile the motor 19 is energized and the transmission 10 driven such that the elongate bodies 7 are subjected to a turning direction such that the helical ends can screw themselves into the meat. During the downward movement the rotational direction of the motor 19 is reversed. The plate 58 sinks downward along with the meat mass and therefore ensures that it is stripped from the elongate bodies 7.

As soon as the vessel 1 has reached the position according to fig. 5, the vessel 1 can be rolled away and a following vessel 1 with contents can be placed in the portal 50.

It is remarked here that the vessel 1 remains open on the top side and that when drilling into the meat mass takes place liquid is not directly supplied to the vessel 1. This can be carried out in the following treatment phase, wherein the meat mass, which has been provided with liquid channels by the drilling and screwing action of the elongate bodies 7, is tenderized by means of massage while simultaneous addition of massaging liquid, for example brine, takes place.

The invention is not limited to the embodiment described above. The prong-like body need not for instance have a tapering form, but can also be cylindrical.

## Claims

1. Device for massaging and tenderizing pieces of meat, which device substantially consists of a vessel (1) for receiving a quantity of meat or pieces of meat, a carrier member (8,56) belonging to the vessel (1), which carrier member is provided with elongate means (7) for forming liquid channels in the meat and means for periodically bringing these elongate means into contact with the meat, **characterized in that** the elongate means consist of one or more rotatably mounted prong-like bodies directed to the vessel, each of which is provided with at least one screw-shaped protrusion (26).

2. Device as claimed in claim 1, **characterized in that** the or each screw-shaped protrusion (26) displays one continuous screw-thread.

3. Device as claimed in claim 2, **characterized in that** in the transition between screw-thread and prong-like body a space is left free.

4. Device as claimed in claims 1-3, **characterized in that** the spaces of successive screw-thread portions are arranged in line with each other in order to form a continuous channel (30).

5. Device as claimed in any of the preceding claims, **characterized in that** the prong-like body (7) takes a conical form.

6. Device as claimed in any of the preceding claims, **characterized in that** the free edge (29) of the screw-thread is sharpened to obtain a cutting action on the meat material.

7. Device as claimed in any of the preceding claims, **characterized in that** the closure element is provided with a dish-shaped bearing part (28) for each screw-shaped protrusion.

8. Device as claimed in any of the preceding claims, **characterized in that** at least a portion of the prong-like bodies (7) is reversibly motor-driven.

9. Device as claimed in claim 8, **characterized in that** the screw-thread on the prong-like bodies (7) is left as well as right-handed, wherein the driving of the left-hand threaded bodies is opposed to that of the right-hand threaded bodies.

## Patentansprüche

1. Vorrichtung zum Massieren und Mürbemachen von Fleischstücken, im wesentlichen bestehend aus einem Gefäß (1) zur Aufnahme einer Fleischmenge oder von Fleischstücken, einem zu dem Gefäß (1) gehörenden Träger (8, 56), der mit langgestreckten Mitteln (7) zur Bildung von Flüssigkeitskanälen in dem Fleisch versehen ist, und Mitteln, um diese langgestreckten Mittel mit dem Fleisch in Berührung zu bringen, dadurch **gekennzeichnet,** daß die lanngestreckten Mittel aus einem oder mehreren, drehbar gelagerten, zinkenähnlichen Körpern bestehen, die zu dem Gefäß gerichtet sind, von denen jeder mit mindestens einem schraubenförmigen Vorsprung (26) versehen ist.

2. Vorrichtung nach Anspruch 1 , dadurch **gekennzeichnet,** daß der oder jeder schraubenförmige Vorsprung (26) einen kontinuierlichen Schraubengang aufweist.

3. Vorrichtung nach Anspruch 2 , dadurch **gekennzeichnet,** daß am Übergang zwischen dem Schraubengang und dem zinkenartigen Körper ein Zwischenraum freigelassen ist.

4. Vorrichtung nach den Ansprüchen 1 bis 3 , dadurch **gekennzeichnet,** daß die Zwischenräume von aufeinander folgenden Schraubengangabschnitten zueinander fluchtend angeordnet sind zur Bildung eines durchgehenden Kanals (30).

5. Vorrichtung nach einem der vorangehenden Ansprüche , dadurch **gekennzeichnet,** daß der zinkenartige Körper (5) eine konische Form hat.

6. Vorrichtung nach einem der vorangehenden Ansprüche , dadurch **gekennzeichnet,** daß die freie Kante (29) des Schraubenganges geschärft ist, um eine Schneidwirkung auf das Fleischmaterial auszuüben.

7. Vorrichtung nach einem der vorangehenden Ansprüche , dadurch **gekennzeichnet,** daß das Verschlußelement mit einem schalenförmigen Lagerteil (28) für jeden schraubenförmigen Vorsprung versehen ist.

8. Vorrichtung nach einem der vorangehenden Ansprüche , dadurch **gekennzeichnet,** daß mindestens ein Teil der zinkenartigen Körper (7) in umkehrbarer Richtung motorgetrieben ist.

9. Vorrichtung nach Anspruch 8 , dadurch **gekennzeichnet,** daß der Schraubengang an den zinkenartigen Körpern (7) sowohl linksgängig als auch rechtsgängig ist, wobei die Antriebsrichtung der mit Linksgewinde versehenen Körper entgegengesetzt zu der der mit Rechtsgewinde versehenen Körper ist.

## Revendications

1. Appareil de malaxage et d'attendrissement de morceaux de viande, l'appareil comprenant essentiellement un réservoir (1) destiné à contenir une certaine quantité de viande ou de morceaux de viande, un organe de support (8, 56) appartenant au réservoir (1) et ayant des dispositifs allongés (7) destinés à former des canaux de circulation de liquide dans la viande, et un dispositif destiné à mettre périodiquement les dispositifs allongés au contact de la viande, caractérisé en ce que les dispositifs allongés comportent plusieurs corps en forme de griffe, montés afin qu'ils puissent tourner et dirigés vers le réservoir, chacun étant muni d'au moins une saillie (26) en forme de vis.

2. Appareil selon la revendication 1, caractérisé en ce que la saillie ou chaque saillie en forme de vis (26) a un filetage continu.

3. Appareil selon la revendication 2, caractérisé en ce que, à la transition entre le filetage et le corps en forme de griffe, un espace reste libre.

4. Appareil selon les revendications 1 à 3, caractérisé en ce que les espaces des parties filetées successives sont alignés mutuellement et forment un canal continu (30).

5. Appareil selon l'une quelconque des revendications précédentes, caractérisé en ce que le corps (7) en forme de griffe a une forme conique.

6. Appareil selon l'une quelconque des revendications précédentes, caractérisé en ce que le bord libre (29) du filetage est aiguisé afin qu'il ait un effet de coupe sur la viande.

7. Appareil selon l'une quelconque des revendications précédentes, caractérisé en ce que l'élément de fermeture a une partie (28) de palier en forme de cuvette pour chaque saillie en forme de vis.

8. Appareil selon l'une quelconque des revendications précédentes, caractérisé en ce qu'une partie au moins des corps (7) en forme de griffe est entraînée par un moteur réversible.

9. Appareil selon la revendication 8, caractérisé en ce que le filetage des corps (7) en forme de griffe a un pas à gauche aussi bien qu'à droite, et l'entraînement des corps à pas à gauche est opposé à celui des corps à pas à droite.

FIG.1

FIG.2

EP 0 391 454 B1

FIG.3

FIG.4

FIG.5